# DEMANDE DE BREVET EUROPEEN

(11) **EP 4 202 744 A1**
(43) Date de publication de la demande: **28.06.2023**
(21) Numéro de dépôt: 22216328.9
(22) Date de dépôt: 23.12.2022
(51) Int. Cl.: G06F 21/57, H04L 9/40

(54) **PROCÉDÉ D'ÉVALUATION AUTOMATIQUE DE FORMATION EN CYBERSÉCURITÉ ET SYSTÈME ASSOCIÉ**

(30) Priorité: 24.12.2021 FR 2114502
(71) Demandeur: AIRBUS CYBERSECURITY SAS, 78990 Élancourt (FR)
(72) Inventeur: MACE, Lorin, Elancourt (FR); PEYNET, Sébastien, Elancourt (FR)
(74) Mandataire: Cabinet Camus Lebkiri

(57) **Abrégé**

Un aspect de l'invention concerne un procédé d'évaluation automatique de formation d'un utilisateur d'un système de formation en cyberdéfense, la formation étant réalisée sur le système de formation en cyberdéfense, le système de formation en cyberdéfense comprenant un simulateur d'infrastructure informatique, un module de scénario, un module de test, et une interface homme-machine, mis en oeuvre par un orchestrateur de formation et comprenant les étapes de :
- Démarrage d'un scénario, comprenant l'envoi d'une requête, par l'orchestrateur de formation, au module de scénario, le scénario comprenant au moins une action à mettre en oeuvre par le simulateur d'infrastructure informatique,
- Réception d'une information relative à l'état de l'infrastructure informatique simulée étant le résultat d'au moins un test après que l'utilisateur a initié une mitigation,
- Génération d'au moins un rapport d'évaluation de la formation de l'utilisateur comprenant au moins la vérification que l'information vérifie une première règle prédéfinie, le rapport d'évaluation comprenant au moins une première métrique représentative d'un résultat de la vérification.

## Description

### DOMAINE TECHNIQUE DE L'INVENTION

Le domaine technique de l'invention est celui de la cybersécurité et en particulier celui de la formation en cybersécurité.

La présente invention concerne un système d'évaluation automatique de la formation en cybersécurité d'un utilisateur et en particulier un système comprenant un orchestrateur d'entraînement capable de gérer des scénarios d'attaque sur une infrastructure informatique simulée et d'évaluer automatiquement les réponses apportées par l'utilisateur du système aux attaques.

### ARRIERE-PLAN TECHNOLOGIQUE DE L'INVENTION

Les infrastructures informatiques sont susceptibles d'être victimes d'attaques informatiques de plus en plus sophistiquées et évoluant rapidement, de nouveaux moyens de pénétration et d'extraction d'information étant identifiés quotidiennement. Pour les contrer, les systèmes informatiques comprennent des centres des opérations de sécurité, abrégés SOC (pour « Security Operations Center » en anglais). Ces SOC sont utilisés par des équipes dont le travail est d'assurer la sécurité du système d'information, d'identifier et d'analyser des incidents de cybersécurité et de remédier à ces incidents. Ce travail d'identification des menaces et de mise au point de solutions face à ces menaces est continu. Il existe donc un besoin, pour les équipes SOC, de maintenir un niveau de connaissances et de compétences en cybersécurité élevé. Pour cela, des systèmes de simulation d'infrastructures informatiques sont développés. Ces systèmes de simulation sont couramment appelés des « Cyber Ranges ».

Par exemple, le produit « CyberRange » de Airbus CyberSecurity permet de concevoir des réseaux virtualisés ou hybrides, émuler des activités unitaires comme des communications entre deux machines ou encore pour lancer des scénarios complexes reproduisant une activité réaliste (échange de fichier, email, trafic web et potentiellement de véritable cyber-attaques). Une Cyber Range peut être disponible dans un caisson mobile, dans une baie ou accessible depuis un cloud.

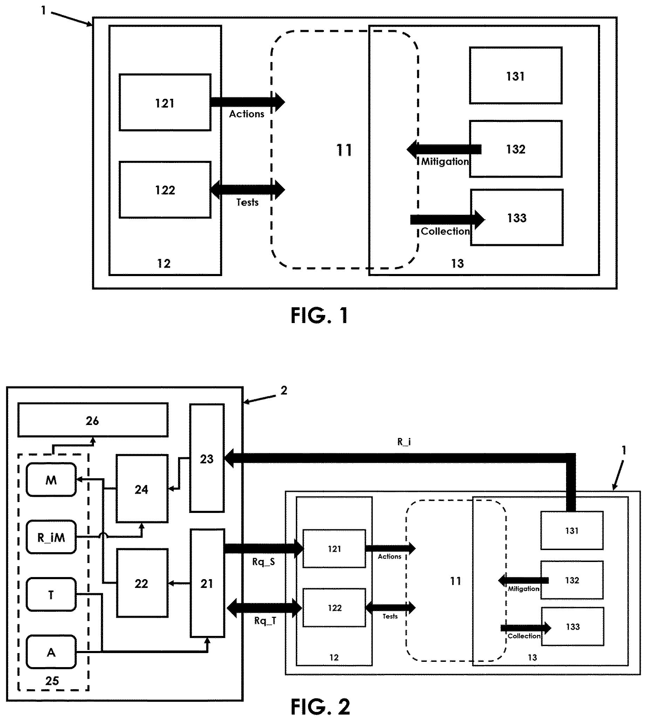

Un exemple de Cyber Range est représenté schématiquement à la Figure 1.

Une cyber range de l'état de l'art représentée à la Figure 1 comprend une infrastructure informatique simulée 11, un module automatisé 12 et un module d'interaction 13.

Le module automatisé 12 comprend des actions prédéfinies, qu'il met en oeuvre dans l'infrastructure simulée 11. Ces actions prédéfinies sont stockées et lancées par le sous-module d'action 121. Elles peuvent être stockées et lancées regroupées, par exemple sous forme de scénario. Ces actions comprennent des attaques de l'infrastructure informatique simulée, par exemple des attaques par déni de service, ou des attaques par force brute. Le module automatisé 12 comprend aussi un sous-module de tests 122, le sous-module de tests permettant au module automatisé de connaître l'état de l'infrastructure simulée 11 et de tester l'infrastructure simulée 11 afin de savoir si les attaques ont été contrées.

L'utilisateur de la cyber range utilise le module d'interaction 13 pour mettre en place des réponses aux actions lancés par le module automatisé 12. Pour cela, le module d'interaction 13 comprend une interface homme-machine 131, généralement sous la forme d'une application ou d'une interface web accédée depuis un ordinateur ou tout autre type de dispositif électronique. Cette interface homme-machine 131 permet à l'utilisateur d'avoir une vision sur l'infrastructure informatique simulée et de mettre en oeuvre des réponses aux actions du sous-module d'action 121. Les réponses aux actions peuvent être des outils spécifiques configurés ou créés par l'utilisateur, et/ou des mitigations choisies par l'utilisateur. Le sous-module de mitigation 132 du module d'interaction 13 lance les mitigations choisies par l'utilisateur. Des exemples de mitigations peuvent être un blocage d'adresse IP (pour « Internet Protocol » en anglais) ou une augmentation de la capacité d'un serveur. Le sous-module de collecte 133 du module d'interaction 13 collecte les informations de l'infrastructure simulée 11 pour la représentation de son état à l'utilisateur.

L'utilisation de telles Cyber Ranges est classiquement réalisée pour simuler des attaques et la réponse du système existant reproduit par l'infrastructure simulée 11 et/ou pour de la formation d'équipes de cybersécurité.

D'autres types de cyber ranges existent, comme par exemple celle décrite par le document US 2020/0184847 A1 intitulé « A system and method for on-premise cyber training ». Dans ce document, la formation en cybersécurité est réalisée à partir de rejeu de logs envoyés au SOC, certains de ces logs comprenant une ou plusieurs entrées identifiables comme preuve d'une attaque. Les participants sont ensuite évalués en fonction des actions qu'ils mènent dans le SOC, le SOC doit donc être rendu compatible avec la solution d'évaluation proposée. Ainsi, cette solution n'est pas satisfaisante en ce qu'elle n'est pas assez flexible, en ce qu'elle ne permet pas d'évaluer tout type d'attaque et en ce qu'elle ne permet pas d'évaluer de manière objective l'ensemble de la formation.

De manière générale, les différents types d'exercices de cybersécurité ne sont pas suffisants dans le contexte actuel, les moyens mis en oeuvre permettent difficilement de rendre accessible ces entraînements et il est important de développer de nouvelles méthodologies pour combler le manque généralisé de formation en Cybersécurité.

Il existe donc un besoin de pouvoir proposer une évaluation objective, flexible et complète de la formation en cybersécurité, avec une formation plus accessible que des exercices à grande échelle qui peuvent se dérouler actuellement.

### RESUME DE L'INVENTION

L'invention offre une solution aux problèmes évoqués précédemment, en permettant une évaluation automatisée et objective de l'ensemble d'une formation en cybersécurité réalisée sur une cyber range comprenant une simulation d'infrastructure informatique.

Un aspect de l'invention concerne un procédé d'évaluation automatique de la formation d'un utilisateur d'un système de formation en cyberdéfense, la formation étant réalisée sur le système de formation en cyberdéfense, le système de formation en cyberdéfense comprenant au moins un simulateur d'infrastructure informatique, au moins un module de scénario, au moins un module de test, et au moins une interface homme-machine, le procédé étant mis en oeuvre par un orchestrateur de formation compris dans le système de formation en cyberdéfense, le procédé étant caractérisé en ce qu'il comprend les étapes de :
- Démarrage d'au moins un scénario, l'étape de démarrage d'un scénario comprenant l'envoi d'une requête, par l'orchestrateur de formation, de démarrage du scénario au module de scénario du système de formation en cybersécurité, le scénario comprenant au moins une action à mettre en oeuvre par le simulateur d'infrastructure informatique,
- Réception d'une information relative à l'état de l'infrastructure informatique simulée envoyée par le module de test, l'information relative à l'état de l'infrastructure informatique simulée étant le résultat d'au moins un test mis en oeuvre par le module de test après que l'utilisateur a initié une mitigation via l'interface homme-machine,
- Génération d'au moins un rapport d'évaluation de la formation de l'utilisateur, la génération comprenant au moins la vérification que l'information relative à l'état de l'infrastructure informatique simulée vérifie une première règle prédéfinie, le rapport d'évaluation comprenant au moins une première métrique représentative d'un résultat de la vérification que l'information relative à l'état de l'infrastructure informatique simulée vérifie la première règle prédéfinie.

Grâce à l'invention, il est possible d'évaluer automatiquement et objectivement un utilisateur en formation de cyberdéfense. L'orchestrateur de formation est interfacé avec une cyber range comprenant un simulateur d'infrastructure informatique, permettant d'évaluer une formation en conditions réelles. L'utilisateur apprend alors à réaliser des interactions sur le système attaqué en temps réel ce qui rend la session de formation plus interactive, tout en ayant une évaluation de la formation fiable et complète sans nécessiter la présence d'un superviseur.

Le procédé est en outre adaptable à toute cyber range comprenant un simulateur d'infrastructure informatique, ne nécessitant pas une modification du SOC de l'entreprise et ne limitant pas les actions possibles. En effet, l'invention peut mettre en oeuvre des actions stockées par l'orchestrateur de formation comme par le module de scénario de la cyber range.

En outre, l'invention est suffisamment flexible pour pouvoir évaluer des mitigations mises en oeuvre par l'utilisateur, et des réponses de tous types, par exemple avec des outils qu'il crée ou des solutions non prévues à l'origine, car c'est notamment l'état du système simulé qui sert de base à l'évaluation. L'invention permet aussi de proposer des formations dans lesquelles l'utilisateur peut créer lui-même son système défensif et être évalué automatiquement dessus.

Outre les caractéristiques qui viennent d'être évoquées dans le paragraphe précédent, le procédé d'évaluation automatique selon un aspect de l'invention peut présenter une ou plusieurs caractéristiques complémentaires parmi les suivantes, considérées individuellement ou selon toutes les combinaisons techniquement possibles :
- la mise en oeuvre de l'action par le simulateur d'infrastructure informatique résulte en au moins une première modification de l'infrastructure informatique simulée, l'information relative à l'état de l'infrastructure informatique simulée comprend au moins une information sur une deuxième modification de l'infrastructure informatique simulée résultant de la mitigation et la première règle prédéfinie est vérifiée lorsque la deuxième modification de l'infrastructure informatique simulée corrige au moins en partie la première modification de l'infrastructure informatique simulée,
- le procédé comprend en outre une étape de réception d'au moins un rapport d'incident envoyé par l'utilisateur via l'interface homme-machine, le rapport d'incident comprenant au moins une information sur une troisième modification de l'infrastructure informatique simulée ajoutée au rapport d'incident par l'utilisateur via l'interface homme-machine, la génération du rapport d'évaluation comprenant en outre au moins la vérification que l'information sur une troisième modification de l'infrastructure informatique simulée issue du rapport d'incident vérifie une deuxième règle prédéfinie, et le rapport d'évaluation comprend en outre une deuxième métrique représentative d'un résultat de la vérification que l'information sur une troisième modification de l'infrastructure informatique simulée issue du rapport d'incident vérifie la deuxième règle prédéfinie,
- la deuxième règle prédéfinie est vérifiée lorsque la troisième modification de l'infrastructure informatique simulée correspond à la première modification de l'infrastructure informatique simulée,
- la deuxième règle prédéfinie est vérifiée en outre lorsque le rapport d'incident reçu correspond à un modèle de rapport d'incident prédéfini,
- le procédé, après la réception de l'information relative à l'état de l'infrastructure informatique simulée et avant la génération du rapport d'évaluation, une étape d'arrêt du scénario, par l'orchestrateur de formation, l'étape d'arrêt du scénario comprenant l'envoi d'une requête, par l'orchestrateur de formation, d'arrêt du scénario au module de scénario du système de formation en cybersécurité, l'étape d'arrêt du scénario étant mise en oeuvre lorsque l'un au moins des évènements suivants survient :
   - un temps prédéterminé du scénario est atteint,
   - l'orchestrateur de formation reçoit, du module de test, l'information relative à l'état de l'infrastructure informatique simulée, et l'information relative à l'état de l'infrastructure informatique simulée comprend une indication que la deuxième modification de l'infrastructure informatique simulée corrige au moins en partie la première modification de l'infrastructure informatique simulée.
- Le procédé comprend le démarrage et l'arrêt de plusieurs scénarios successivement et le rapport d'évaluation généré comprend au moins la première métrique pour chaque scénario,
- le scénario comprend une pluralité d'actions à mettre en oeuvre par le simulateur d'infrastructure informatique, la pluralité d'actions comprenant au moins une action légitime et au moins une attaque.

On entendra par « première modification » une modification de l'infrastructure informatique simulée résultant d'une action du scénario sur l'infrastructure informatique simulée, par « deuxième modification » une modification résultant d'une mitigation par l'utilisateur du scénario sur l'infrastructure informatique simulée et par « troisième modification » une modification de l'infrastructure informatique simulée identifiée par l'utilisateur du système, qui correspond à la première modification du système si l'utilisateur a bien identifié l'action du scénario ou qui ne correspond pas à la première modification si l'utilisateur a mal identifié l'action du scénario. Les « deuxième » modification et « troisième » modification sont appelées « deuxième » et « troisième » par ordre d'introduction et non par ordre d'exécution, ainsi, l'invention n'est pas limitée à la survenance de la troisième modification avant la deuxième modification ni inversement.

Un autre aspect de l'invention concerne un système de formation en cyberdéfense d'un utilisateur comprenant au moins un simulateur d'infrastructure informatique, au moins un module de scénario, au moins un module de test, et au moins une interface homme-machine, le système de formation étant caractérisé en ce qu'il comprend un module orchestrateur de formation, l'orchestrateur de formation étant configuré pour mettre en oeuvre le procédé d'évaluation automatique selon l'invention.

Outre les caractéristiques qui viennent d'être évoquées dans le paragraphe précédent, le système de formation en cyberdéfense selon un aspect de l'invention peut présenter une ou plusieurs caractéristiques complémentaires parmi les suivantes, considérées individuellement ou selon toutes les combinaisons techniquement possibles :
- L'orchestrateur de formation comprend une base de données stockant au moins le scénario, le scénario étant envoyé au module de scénario avec la requête de démarrage du scénario,
- La base de données stocke au moins le test, le test étant envoyé au module de test avec une requête d'exécution du test,
- La base de données stocke au moins le modèle de rapport d'incident prédéfini,
- La base de données stocke au moins chaque métrique,
- L'orchestrateur de formation comprend un module d'évaluation des mitigations configuré pour mettre en oeuvre la vérification que l'information relative à l'état de l'infrastructure informatique simulée vérifie la première règle prédéfinie,
- L'orchestrateur de formation comprend un module d'évaluation des incidents configuré pour mettre en oeuvre la vérification que l'information sur une troisième modification de l'infrastructure informatique simulée issue du rapport d'incident vérifie une deuxième règle prédéfinie.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'une cyber range de l'état de l'art,
- La figure 2 montre une représentation schématique d'un système de formation en cyberdéfense selon l'invention,
- La figure 3 montre une représentation schématique d'un procédé d'évaluation automatique d'une formation en cyberdéfense selon l'invention,
- La figure 4 montre une représentation schématique d'un exemple de mise en oeuvre du procédé d'évaluation automatique d'une formation en cyberdéfense selon l'invention,
- La Figure 5 montre une représentation schématique d'un exemple de mise en oeuvre du procédé selon l'invention avec plusieurs scénarios.

### DESCRIPTION DETAILLEE

Sauf précision contraire, un même élément apparaissant sur des figures différentes présente une référence unique.

La figure 2 montre une représentation schématique d'un système de formation en cyberdéfense selon l'invention.

Le système de formation en cyberdéfense permet à un utilisateur (non représenté) de se former à répondre à des attaques d'une infrastructure informatique simulée. Pour cela, le système comprend une plateforme 1 de simulation d'une infrastructure informatique telle qu'une cyber range connue de l'état de l'art. La plateforme 1 comprend un module simulateur d'infrastructure informatique 11, une interface homme-machine 131, un module de mitigation 132, un module de collection 133, un module de scénario 121 et un module de test 122, tel que décrit précédemment.

L'interface homme-machine 131 peut être toute interface permettant à un utilisateur humain d'utiliser le système, de lancer des actions sur le système, d'entrer des informations dans le système et de s'informer sur l'état du système. Par exemple, l'interface homme-machine peut être un dispositif électronique, par exemple un smartphone, un ordinateur comprenant un écran, un clavier et un dispositif de pointage, ou tout autre dispositif permettant à un être humain d'interagir avec le système.

Le module de mitigation 132 permet à l'utilisateur de lancer des mitigations, c'est-à-dire qu'il comprend des outils permettant de lancer des mitigations, ces outils pouvant être utilisés par l'utilisateur via l'interface homme-machine 131. II est entendu par « mitigation » une action permettant de réduire les effets d'un incident survenant sur l'infrastructure informatique simulée 11. Des exemples sont donnés plus loin dans la description.

Le module de collecte 133 permet de collecter l'état de l'infrastructure informatique simulée 11 et de l'afficher à l'utilisateur via l'interface homme-machine.

Le module de scénario 121 permet d'exécuter des scénarios sur l'infrastructure informatique simulée 11. Un scénario comprend une ou plusieurs actions ayant pour effet d'entraîner une modification d'au moins une partie de l'infrastructure informatique simulée 11. Par exemple, une modification d'au moins une partie de l'infrastructure informatique simulée 11 est une modification des ressources accessibles, une modification de la capacité d'accès d'un utilisateur de l'infrastructure informatique simulée 11, un accès par un utilisateur de l'infrastructure informatique simulée 11, une modification des capacités de réponse à des requêtes, par exemple d'un serveur simulé, ou toute autre modification de l'infrastructure informatique simulée 11. Dans certains cas, la modification entraîne l'interruption d'un service proposé par l'infrastructure informatique simulée 11, par exemple l'accès à un site web, à une messagerie, à un système de fichiers, ou l'interruption d'une surveillance ou d'une maintenance de machine ou de système, ou l'interruption d'une partie d'un service.

Le module de test 122 permet d'exécuter des tests sur l'infrastructure informatique simulée 11 afin de connaître son état. Le module de test 122 permet d'obtenir une information sur l'état de l'infrastructure informatique simulée, l'information étant une donnée représentative de cet état. De tels tests sont par exemple des tests d'accès à une ressource, à un serveur ou des tests de connexion. Dans un mode de réalisation, les tests permettent de connaître la disponibilité d'au moins un service proposé par l'infrastructure informatique simulée ou d'au moins une partie d'un service proposé par l'infrastructure informatique simulée, préférentiellement les tests permettent de connaître la disponibilité des seuls services proposés par l'infrastructure informatique simulée impactés par le scénario. L'état peut alors être représenté par un booléen indiquant, pour chaque service ou pour au moins un service, si celui-ci est disponible ou non. L'état peut être représenté par tout type de données, comme une chaîne de caractères, afin d'avoir plusieurs états pour un service, par exemple « disponible », « disponible mais modifié » et « non disponible ». Au-delà de vérifier l'état d'un service, l'invention couvre aussi les cas où des fonctionnalités spécifiques de services sont vérifiées, par exemple la présence et l'intégrité de comptes utilisateurs, l'accessibilité au service d'un point de vue réseau ou encore l'accessibilité à un point de terminaison (« endpoint » en anglais) d'un service.

Les différents modules sont préférentiellement des modules logiciels, sous la forme d'instructions stockées dans une mémoire du système, les instructions étant exécutées par un processeur du système, l'exécution des instructions conduisant à la mise en oeuvre des étapes du procédé selon l'invention et à la réalisation des actions par les différents modules. L'invention ne se limite pas aux modules logiciels, et les différents modules peuvent aussi être des dispositifs physiques séparés ou toute combinaison de dispositifs physiques et de modules logiciels.

En outre, grâce à l'invention, le système permet d'évaluer automatiquement les réponses de l'utilisateur et les actions qu'il met en oeuvre. Pour cela, le système comprend un module orchestrateur de formation 2 représenté à la Figure 2.

Dans un mode de réalisation, le module orchestrateur de formation 2 est un module logiciel implémenté par exemple sous forme de microservice dans un ordinateur comprenant la plateforme 1 et l'orchestrateur 2. Dans un autre mode de réalisation, le module orchestrateur de formation 2 est implémenté dans un dispositif séparé de la plateforme 1. Dans une variante à ce deuxième mode de réalisation, le module orchestrateur de formation 2 implémenté dans un dispositif dédié est interconnecté à plusieurs plateformes 2 et permet d'évaluer la formation de plusieurs utilisateurs simultanément.

Le module orchestrateur de formation 2 comprend préférentiellement une base de données 25. Dans un mode de réalisation, la base de données 25 est comprise dans le même dispositif que le module orchestrateur 2. Dans un autre mode de réalisation, la base de données 25 est distante du module orchestrateur 2 et est accédée via un réseau.

Le module orchestrateur de formation 2 comprend au moins un module de gestion 21 de la plateforme 1, au moins un module d'évaluation 22 et un module de génération de rapport d'évaluation 26. Le module orchestrateur de formation 2 représenté à la figure 2 comprend un module de réception de rapport d'incident 23 optionnel et un module d'évaluation du rapport d'incident 24. La Figure 2 montre deux modules d'évaluation, un module d'évaluation de mitigations 22 et un module d'évaluation du rapport d'incident 24, mais l'invention couvre aussi les cas où ces deux modules sont confondus.

Les différents modules de l'orchestrateur de formation 2 sont préférentiellement des modules logiciels, sous la forme d'instructions stockées dans une mémoire du système, les instructions étant exécutées par un processeur du système, l'exécution des instructions conduisant à la mise en oeuvre des étapes du procédé selon l'invention et à la réalisation des actions par les différents modules. L'invention ne se limite pas aux modules logiciels, et les différents modules peuvent aussi être des dispositifs physiques séparés ou toute combinaison de dispositifs physiques et de modules logiciels. Lorsque l'on prête une action à un module, il faut entendre par là que sont exécutées des instructions qui conduisent à la mise en oeuvre de l'action, par le dispositif implémentant le module ou par le module lorsque celui-ci est un dispositif indépendant.

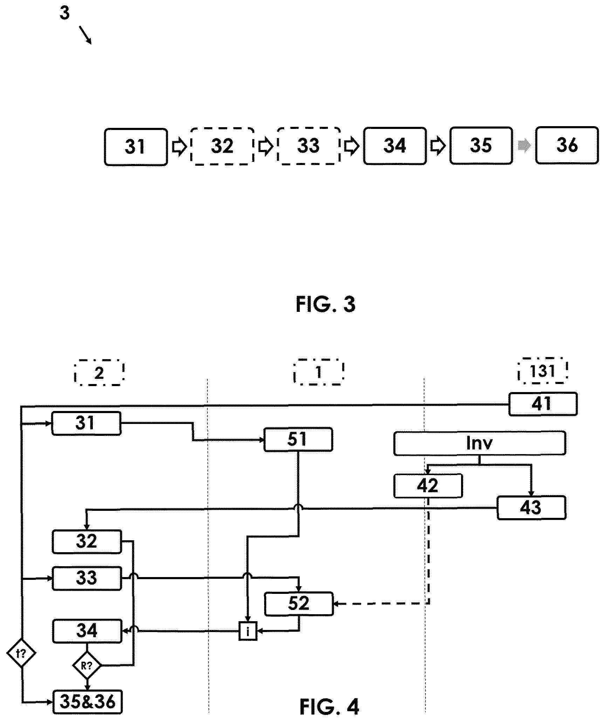

L'orchestrateur de formation 2 selon l'invention est configuré pour mettre en oeuvre le procédé d'évaluation automatique de la formation d'un utilisateur en cyberdéfense 3 représenté à la Figure 3.

La Figure 3 montre une représentation schématique du procédé selon l'invention.

Le procédé 3 d'évaluation automatique de la formation en cybersécurité d'un utilisateur comprend au moins quatre étapes. Six étapes sont représentées à la Figure 3, les étapes 32 et 33 représentées en pointillés étant optionnelles.

Pour une compréhension plus aisée du procédé 3 selon l'invention, la Figure 4 montre un exemple d'implémentation du procédé 3 selon l'invention au sein du système de formation en cyberdéfense de la Figure 2.

Comme représenté à la Figure 4, un utilisateur du système de formation en cyberdéfense de la Figure 2 souhaite démarrer une session de formation à une étape 41. Pour cela, il lance la formation via l'interface homme-machine 131 de la plateforme 1, créant une requête de démarrage de formation en cyberdéfense.

Cette requête est envoyée au module orchestrateur 2, par exemple via un réseau ou directement en appelant une fonction prédéfinie si l'orchestrateur 2 et la plateforme 1 sont dans le même dispositif.

A la suite du démarrage de la formation, l'orchestrateur 2 est configuré pour réaliser une première étape du procédé 3 selon l'invention.

La première étape est une étape 31 de démarrage d'au moins un scénario. Un scénario est un ensemble d'actions A comprenant au moins une action à réaliser sur l'infrastructure informatique distribuée 11. L'étape de démarrage 31 d'un scénario comprend l'envoi d'une requête Rq_S, par l'orchestrateur de formation 2, de démarrage du scénario au module de scénario 121. La requête comprend au moins une indication du scénario à jouer. La requête peut comprendre dans un mode de réalisation dans lequel les actions A sont stockées en base de données 25, les actions A à lancer par le module de scénario 121. Le scénario comprend au moins une action A à mettre en oeuvre par le simulateur d'infrastructure informatique 11, la mise en oeuvre de l'action résultant en au moins une première modification de l'infrastructure informatique simulée 11. Cette première modification résulte par exemple d'une attaque par énumération ou d'un déni de service par rançongiciel. Les deux exemples précédents sont des cyberattaques, mais l'invention couvre aussi les cas où l'action est une action légitime, par exemple une connexion à distance légitime. Comme toute action laisse des traces, même une action légitime résulte en une modification de l'infrastructure informatique simulée 11, par exemple un ajout d'une ligne dans un fichier de journalisation (aussi dit « fichier log ») suite à la connexion légitime. Utiliser des actions légitimes permet aussi d'évaluer la capacité de l'utilisateur à différencier des actions malveillantes d'actions légitimes.

Dans un mode de réalisation, les actions A comprises dans le scénario sont stockées par la base de données 25 de l'orchestrateur 2, comme représenté à la Figure 2. Dans un autre mode de réalisation non représenté, les actions A sont stockées par le module de scénario 121 de la plateforme 1 et lancées suite à la réception de la requête Rq_S par le module de scénario 121. Une action A lancée sur l'infrastructure informatique simulée 11 simule ou correspond à une action lancée sur une infrastructure informatique réelle.

Suite à cette étape 31, la plateforme 1 réalise l'étape 51 d'exécution de la ou des actions comprises dans le scénario, à des temps prédéfinis par le scénario, ce afin d'imiter une attaque ou une action légitime sur l'infrastructure informatique simulée 11.

A la suite de cette exécution 51 de l'action, l'utilisateur réalise une investigation sur l'infrastructure informatique simulée 11. Cette investigation comprend au moins la mise en oeuvre d'une mitigation à l'étape 42. La mitigation est initiée par l'utilisateur via l'interface homme-machine 131 puis mise en oeuvre par la plateforme 1 dans l'infrastructure informatique simulée 11. Comme indiqué précédemment, une mitigation est une réponse au moins partielle à l'action A du scénario exécutée à l'étape 51.

Dans un mode de réalisation l'utilisateur met aussi en oeuvre une étape 43 d'envoi d'un rapport d'incident R_i via l'interface homme-machine 131. Un tel rapport d'incident R_i comprend au moins une information sur une modification de l'infrastructure informatique simulée 11 ajoutée au rapport d'incident R_i par l'utilisateur via l'interface homme-machine 131. Cette information sur une modification de l'infrastructure informatique simulée 11 peut être égale ou correspondre à la modification de l'infrastructure informatique simulée 11 résultant de la mise en oeuvre de l'action A du scénario, si l'utilisateur a bien identifié l'action A, ou peut être différente de la modification de l'infrastructure informatique simulée 11, si l'utilisateur a mal identifié l'action A. Dans le mode de réalisation dans lequel l'utilisateur a rempli un rapport d'incident R_i, le procédé 3 selon l'invention comprend une étape 32 de réception du rapport d'incident R_i, par le module de réception de rapport d'incident 23 de l'orchestrateur 2. Ce rapport d'incident R_i est ensuite analysé par le module d'évaluation de rapport d'incident 24 comme sera décrit plus loin dans la description. Cette étape 32 de réception de rapport d'incident est représentée en pointillés à la Figure 3 car elle n'est mise en oeuvre que dans le mode de réalisation où l'utilisateur est évalué sur les réponses qu'il apporte aux actions A et sur sa capacité d'analyse restituée dans le rapport d'incident R_i.

Le procédé 3 selon l'invention comprend ensuite une étape optionnelle 33 de lancement de tests. Cette étape est optionnelle car elle peut être réalisée, dans un autre mode de réalisation, continuellement par le module de tests 122, qui envoie alors continuellement les résultats des tests à l'orchestrateur 2. Dans encore un autre mode de réalisation, le module de tests 122 ne réalise de tests qu'après l'exécution d'une action A par le module de scénario 121 et/ou après l'exécution d'une mitigation par le module de mitigation 131. Dans un tel cas, le module de tests 122 envoie alors les résultats des tests à l'orchestrateur 2 après qu'ils aient été mis en oeuvre. Cette étape 33 comprend l'envoi d'une requête Rq_T, par l'orchestrateur de formation 2, de lancement de tests au module de test 122. La requête comprend au moins une indication du test à exécuter. La requête peut comprendre, dans un mode de réalisation dans lequel les tests T sont stockés en base de données 25, les tests T à lancer par le module de test 122.

Dans un mode de réalisation, les tests T sont stockés par la base de données 25 de l'orchestrateur 2, comme représenté à la Figure 2. Dans un autre mode de réalisation non représenté, les test T sont stockés par le module de test 122 de la plateforme 1 et lancés suite à la réception de la requête Rq_T par le module de test 122. Un test T lancé sur l'infrastructure informatique simulée 11 simule ou correspond à un test lancé sur une infrastructure informatique réelle.

Un test T est une action de requêtage permettant d'obtenir une information relative à l'état de l'infrastructure informatique simulée 11. Une information relative à l'état de l'infrastructure simulée est par exemple une information sur la disponibilité d'un serveur simulé, une information sur une adresse attribuée, un fichier ou une partie d'un fichier de journalisation (aussi appelé « log »), ou toute autre donnée représentative d'au moins une partie de l'infrastructure informatique simulée 11.

Le procédé 3 selon l'invention comprend ensuite une étape 34 de réception de l'information relative à l'état de l'infrastructure informatique simulée 11 envoyée par le module de test 122 à l'orchestrateur 2. Cette information relative à l'état de l'infrastructure informatique simulée 11 est ensuite analysée par le module d'évaluation de rapport d'incident 24 comme sera décrit plus loin dans la description.

Le procédé 3 selon l'invention comprend ensuite une étape 35 d'arrêt du scénario. En effet, selon l'invention, plusieurs scénarios peuvent être joués avant la génération d'un rapport d'évaluation. Une étape 35 d'arrêt d'un scénario est alors nécessaire pour démarrer le scénario suivant et reprendre le procédé 3 à l'étape 31. Toutes les données servant à la génération du rapport d'évaluation sont alors stockées en base de données 25, et sont utilisées à l'étape 36 pour couvrir tous les scénarios.

L'étape 35 d'arrêt du scénario en cours comprend l'envoi d'une requête, par l'orchestrateur de formation 2, d'arrêt du scénario au module de scénario 121 de la plateforme 1, et est réalisée si au moins une des actions suivantes est réalisée lorsque l'un au moins des évènements suivants survient :
- si un temps prédéterminé t du scénario est atteint (« t? » à la Figure 4), correspondant à un temps maximal pour résoudre ou au moins mitiger, par l'utilisateur, les incidents liés au scénario.
- si l'orchestrateur de formation 2 reçoit (« R? » à la Figure 4), du module de test 121, l'information relative à l'état de l'infrastructure informatique simulée 11, et l'information relative à l'état de l'infrastructure informatique simulée 11 comprend une indication que la modification de l'infrastructure informatique simulée résultant d'un test suite à la mitigation corrige au moins en partie la modification de l'infrastructure informatique simulée 11 résultant des actions A du scénario. Pour vérifier que l'information relative à l'état de l'infrastructure informatique simulée 11 comprend une telle indication, l'orchestrateur 2 peut utiliser son module d'évaluation de mitigation 22, qui compare alors un état initial de l'infrastructure informatique simulée 11 aux modifications réalisées successivement par l'action A puis par la mitigation de l'utilisateur. L'état initial peut avoir été récupéré précédemment par une requête Rq_T auprès du module de test 122 après l'étape de démarrage 31.

Après l'étape d'arrêt du scénario 35, le procédé 3 selon l'invention comprend une étape 36 de génération d'au moins un rapport d'évaluation de la formation de l'utilisateur.

L'étape 36 de génération comprend plusieurs vérifications, notamment des comparaisons, que l'utilisateur a mis au point les bonnes réponses aux actions A du scénario et qu'il a bien analysé le scénario dans le mode de réalisation dans lequel l'utilisateur envoie un rapport d'incident R_i.

L'étape 36 comprend au moins la vérification, par le module d'évaluation de mitigation 22, que l'information relative à l'état de l'infrastructure informatique simulée 11 vérifie une première règle prédéfinie.

Cette première règle prédéfinie est vérifiée lorsque la modification de l'infrastructure informatique simulée 11 résultant de la mitigation par l'utilisateur, c'est-à-dire la deuxième modification, corrige au moins en partie la première modification de l'infrastructure informatique simulée 11 résultant de l'action A du scénario.

Cette vérification peut utiliser les résultats de la vérification précédente ayant abouti à l'arrêt du scénario.

Lorsque l'action a été correctement mitigée, c'est-à-dire lorsque la mitigation réalisée par l'utilisateur correspond à la mitigation attendue ou lorsque le résultat de la mitigation réalisée par l'utilisateur correspond à un état de l'infrastructure informatique simulée 11 attendu, le rapport d'évaluation comprend une métrique indiquant que l'utilisateur a répondu correctement au scénario. Cette métrique peut par exemple être un pourcentage de réussite en fonction du nombre de services rétablis ou des performances de l'infrastructure informatique simulée 11 atteintes après résolution totale ou partielle du scénario. Dans le cas contraire, la métrique indique que l'utilisateur n'a pas répondu correctement au scénario.

Dans le mode de réalisation dans lequel l'utilisateur a rempli et envoyé un rapport d'incident R_i à l'orchestrateur 2, la génération 36 du rapport d'évaluation comprenant en outre au moins la vérification que l'information sur une modification de l'infrastructure informatique simulée issue du rapport d'incident R_i, c'est-à-dire une modification identifiée par l'utilisateur, vérifie une deuxième règle prédéfinie.

La deuxième règle prédéfinie est vérifiée lorsque la modification de l'infrastructure informatique simulée 11 identifiée par l'utilisateur et restituée dans le rapport d'incident R_i correspond à la modification de l'infrastructure informatique simulée 11 résultant de l'action A du scénario. Cela indique alors que l'utilisateur a bien identifié l'action A. Dans un mode de réalisation, la deuxième règle prédéfinie comprend en outre la vérification que le rapport d'incident correspond à un modèle de rapport d'incident prédéfini. Ce modèle est alors stocké par la base de données 25 et est sert de point de comparaison pour le modèle d'incident reçu R_i. Cela permet de s'assurer que l'utilisateur rédige ses rapports d'incident comme attendu.

Lorsque le rapport d'incident comprend une analyse correcte du scénario et/ou lorsqu'il correspond à un modèle de rapport d'incident attendu, le rapport d'évaluation comprend une métrique indiquant que l'utilisateur a correctement analysé le scénario. Cette métrique peut par exemple être un pourcentage de réussite en fonction du nombre d'actions A identifiées correctement ou de la rapidité d'analyse en fonction du temps de réception du rapport d'incident R_i. Dans le cas contraire, la métrique indique que l'utilisateur n'a pas analysé correctement le scénario.

Le rapport d'évaluation généré à l'étape 36 peut alors être envoyé à l'interface homme-machine 131 pour affichage, ou à un système distant accessible depuis un réseau pour affichage, ou directement affiché par un dispositif implémentant l'orchestrateur 2, ou tout autre moyen pour l'utilisateur de prendre connaissance du rapport d'évaluation. Le rapport d'évaluation peut en outre être stocké dans une base de données, par exemple dans la base de données 25 ou dans une base de données distante, pour accès ultérieur à ce rapport d'évaluation.

En outre, chaque métrique Met se retrouvant dans le rapport d'évaluation peut être stockée dans la base de données 25 ou dans une autre base de données distante, pour permettre une comparaison de l'évolution des métriques lors de formations réalisées plusieurs fois à intervalles de temps séparés. Cela permet de prendre connaissance de l'évolution des connaissances de l'utilisateur.

Plusieurs exemples de scénarios vont maintenant être décrits.

Après le démarrage d'un exercice, l'orchestrateur 2 déclenche le scénario associé à l'exercice dans l'infrastructure informatique simulée 11.

L'utilisateur peut réaliser une investigation au sein de l'infrastructure informatique simulée 11 qui lui est accessible.

A l'issue de l'investigation, l'utilisateur peut :
- Créer un rapport d'incident R_i qui sera collecté par l'orchestrateur 2.
- Réaliser une mitigation à l'attaque A ou aux attaques A potentiellement présentes dans le scénario,

L'orchestrateur 2 exécute à intervalle régulier des scripts de tests T permettant de vérifier :
- Si la ou les potentielles attaques sont mitigées,
- Si les services impactés par le scénario sont toujours fonctionnels ou redevenus fonctionnels.

A la fin de l'intervalle de temps t associé à cet exercice ou lors d'une mitigation réussie et/ou après le rapport d'incident R_i soumis, la fin du scénario est déclenchée.

Au cours de la réalisation d'un ou plusieurs exercices, l'évaluation E automatisée est effectuée en prenant en compte la différence des réponses du formulaire donnés par l'apprenant avec les résultats attendus dans le modèle de l'exercice ainsi que les retours tests et des et d'utilisateurs légitimes.

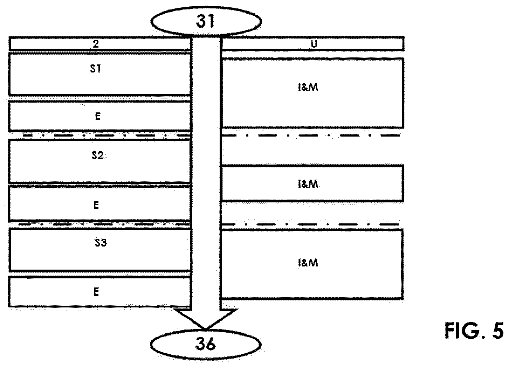

La Figure 5 montre une représentation schématique d'un exemple de session de formation composée de 3 scénarios.

L'exemple de session de formation décrit dans la figure 5 contient 3 scénarios S1 à S3: une attaque par énumération, une connexion à distance légitime et une attaque par déni de service via l'exécution d'un rançongiciel.

Dans le premier exercice de la session d'entrainement d'exemple, le scénario S1 comprend une attaque A par énumération qui cible un compte utilisateur d'un service particulier.

Pendant que l'attaque A par énumération se déroule, l'utilisateur U peut décider de bloquer cette attaque via différentes techniques de mitigation M, comme par exemple :
- Bloquer l'adresse IP de la source de l'attaque A,
- Verrouiller le compte utilisateur qui est la destination de l'attaque A.

Pendant l'exécution de cette attaque A, l'orchestrateur 2 va collecter les traces de l'attaque grâce aux tests T afin de déterminer si elle a été bloquée avec succès et va également lancer des scripts d'utilisateurs légitimes et collecter leurs traces grâce aux tests T afin de vérifier s'il y a eu des interruptions de services durant l'intervention de la mitigation.

L'utilisateur U peut également, en parallèle de, avant, ou après la mitigation M, compléter 1 un rapport d'incident R_i pour statuer de l'état de compréhension du système pendant l'attaque, ou il devra noter les informations clés de l'attaque, comme par exemple sa nature, le système impacté, les informations relatives à l'attaquant et / ou les lignes de fichiers de journalisation (logs) collectés pendant l'attaque.

Pour ce scénario S1, l'évaluation E de l'utilisateur U peut prendre en compte le rapport d'incident R_i soumis en le comparant avec le modèle M_Ri, mais également des potentielles interruptions de services, détectés dans les traces relevées par l'orchestrateur d'entrainement ainsi que le délai avec laquelle l'attaque par énumération a été bloqué ou si elle a abouti, grâce aux tests T menés et aux informations sur les modifications de l'infrastructure informatique simulée 11 issue de ces tests.

Le deuxième scénario S2 contient uniquement des actions légitimes, et notamment la connexion à distance sur un système local. L'apprenant peut remplir 1 un rapport d'incident R_i et réaliser des mitigations M.

L'utilisateur U va être évalué sur la présence d'un rapport d'incident R_i, qui n'est pas nécessaire dans ce contexte précis, et également sur la disponibilité des services présents dans le scénario S2 qui peuvent avoir un impact négatif dans sa notation en cas d'application de la part de l'apprenant de mitigations M non nécessaire.

Le troisième scénario S3 de cette session d'exemple comprend l'exécution d'un rançongiciel sur une cible qui va chiffrer différents fichiers d'un serveur et ainsi interrompre un service. Apres l'exécution de cette attaque, l'utilisateur U constate cette attaque et l'investigue. Il peut remplir un rapport d'incident R_i avec toutes les informations associées. Il peut alors réaliser une mitigation M : il récupére le malware et fait une investigation via ingénierie inverse afin de retrouver la clé de chiffrement. Une fois cette clé récupérée, l'utilisateur U peut déchiffrer les fichiers associés aux services pour les rétablir.

L'utilisateur U peut remplir un rapport d'incident R_i contenant des informations clé de l'attaque comme par exemple la nature de l'attaque, le système et les services impacté, et le serveur depuis lequel le rançongiciel a été téléchargé. Ces informations sont des informations sur les modifications de l'infrastructure informatique simulée 11.

Pour ce scénario S3, l'évaluation E automatisée peut prendre en compte le rapport d'incident R_i soumis par l'utilisateur U ainsi que le délai avec lequel le service a été restauré, grâce aux tests T et aux informations issues de ces tests.

A l'issue de cet entrainement, le rapport d'évaluation comprenant les résultats des exercices est généré. Il peut ensuite être transmis à l'utilisateur U et / ou à une plateforme d'apprentissage pour assurer un suivi des exercices réalisés par l'utilisateur U et être potentiellement à l'origine de certifications.

## Revendications

1. Procédé (3) d'évaluation automatique de la formation d'un utilisateur (U) d'un système de formation en cyberdéfense, le système de formation en cyberdéfense comprenant au moins un simulateur d'infrastructure informatique (11), au moins un module de scénario (121), au moins un module de test (122), et au moins une interface homme-machine (131), le procédé (3) étant mis en oeuvre par un module orchestrateur de formation (2) compris dans le système de formation en cyberdéfense, le procédé (3) étant **caractérisé en ce qu'**il comprend les étapes de :
- Démarrage (31) d'au moins un scénario (S1,S2,S3), l'étape de démarrage d'un scénario (S1,S2,S3) comprenant l'envoi d'une requête (Rq_S), par l'orchestrateur de formation (2), de démarrage du scénario (S1,S2,S3) au module de scénario (121) du système de formation en cybersécurité, le scénario (S1,S2,S3) comprenant au moins une action (A) à mettre en oeuvre par le simulateur d'infrastructure informatique (11), la mise en oeuvre de l'action (A) par le simulateur résultant en la survenue d'un incident sur l'infrastructure informatique simulée (11),
- Réception (34) d'une information relative à l'état de l'infrastructure informatique simulée (11) envoyée par le module de test (122), l'information relative à l'état de l'infrastructure informatique simulée (11) étant le résultat d'au moins un test (T) mis en oeuvre par le module de test (122) après que l'utilisateur (U) a initié une mitigation (M) via l'interface homme-machine (131), ladite mitigation consistant en l'action (A) permettant de réduire des effets d'un incident survenant sur l'infrastructure informatique simulée 11,
- Génération (36) d'au moins un rapport d'évaluation de la formation de l'utilisateur (U) par un module de génération de rapport d'évaluation (26), la génération (36) comprenant au moins la vérification que l'information relative à l'état de l'infrastructure informatique simulée (11) vérifie une première règle prédéfinie, la vérification de la première règle prédéfinie consistant en une modification de l'infrastructure informatique simulée (11) résultant de la mitigation par l'utilisateur permettant de corriger au moins en partie la première modification de l'infrastructure informatique simulée 11 résultant de l'action (A) du scénario, le rapport d'évaluation comprenant au moins une première métrique (Met) représentative d'un résultat de la vérification que l'information relative à l'état de l'infrastructure informatique simulée (11) vérifie la première règle prédéfinie.

2. Procédé (3) selon la revendication 1 selon lequel la mise en oeuvre de l'action (A) par le simulateur d'infrastructure informatique (11) résulte en au moins une première modification de l'infrastructure informatique simulée (11), l'information relative à l'état de l'infrastructure informatique simulée (11) comprend au moins une information sur une deuxième modification de l'infrastructure informatique simulée (11) résultant de la mitigation (M) et la première règle prédéfinie est vérifiée lorsque la deuxième modification de l'infrastructure informatique simulée (11) corrige au moins en partie la première modification de l'infrastructure informatique simulée (11).

3. Procédé (3) selon l'une quelconque des revendications précédentes comprenant en outre une étape de réception (32) d'au moins un rapport d'incident (R_i) envoyé par l'utilisateur (U) via l'interface homme-machine (131), le rapport d'incident (R_i) comprenant au moins une information sur une troisième modification de l'infrastructure informatique simulée (11) ajoutée au rapport d'incident (R_i) par l'utilisateur (U) via l'interface homme-machine (131), la génération (36) du rapport d'évaluation comprenant en outre au moins la vérification que l'information sur une troisième modification de l'infrastructure informatique simulée (11) issue du rapport d'incident (R_i) vérifie une deuxième règle prédéfinie, et le rapport d'évaluation comprend en outre une deuxième métrique (Met) représentative d'un résultat de la vérification que l'information sur une troisième modification de l'infrastructure informatique simulée (11) issue du rapport d'incident (R_i) vérifie la deuxième règle prédéfinie.

4. Procédé (3) selon la revendication 3 selon lequel la deuxième règle prédéfinie est vérifiée lorsque la troisième modification de l'infrastructure informatique simulée (11) correspond à la première modification de l'infrastructure informatique simulée (11).

5. Procédé (3) selon l'une quelconque des revendications 3 à 4 selon lequel la deuxième règle prédéfinie est vérifiée en outre lorsque le rapport d'incident (R_i) reçu correspond à un modèle de rapport d'incident (R_i) prédéfini.

6. Procédé (3) selon l'une quelconque des revendications précédentes comprenant, après la réception (34) de l'information relative à l'état de l'infrastructure informatique simulée (11) et avant la génération du rapport d'évaluation, une étape d'arrêt (35) du scénario (S1,S2,S3), par l'orchestrateur de formation (2), l'étape d'arrêt du scénario (S1,S2,S3) comprenant l'envoi d'une requête, par l'orchestrateur de formation (2), d'arrêt du scénario (S1,S2,S3) au module de scénario (121) du système de formation en cybersécurité, l'étape d'arrêt du scénario (S1 ,S2,S3) étant mise en oeuvre lorsque l'un au moins des évènements suivants survient :
- un temps prédéterminé (t)du scénario (S1,S2,S3) est atteint,
- l'orchestrateur de formation (2) reçoit, du module de test (122), l'information relative à l'état de l'infrastructure informatique simulée (11), et l'information relative à l'état de l'infrastructure informatique simulée (11) comprend une indication que la deuxième modification de l'infrastructure informatique simulée (11) corrige au moins en partie la première modification de l'infrastructure informatique simulée (11).

7. Procédé (3) selon la revendication 6 comprenant le démarrage (31) et l'arrêt (35) de plusieurs scénarios (S1,S2,S3) successivement et le rapport d'évaluation généré (36) comprend au moins la première métrique (Met) pour chaque scénario (S1,S2,S3).

8. Procédé (3) selon l'une quelconque des revendications précédentes selon lequel le scénario (S1,S2,S3) comprend une pluralité d'actions (A) à mettre en oeuvre par le simulateur d'infrastructure informatique (11), la pluralité d'actions (A) comprenant au moins une action (A) légitime et au moins une attaque.

9. Système de formation en cyberdéfense d'un utilisateur (U) comprenant au moins un simulateur d'infrastructure informatique (11), au moins un module de scénario (121), au moins un module de test (122), et au moins une interface homme-machine (131), le système de formation étant **caractérisé en ce qu'**il comprend un module orchestrateur de formation (2), le module orchestrateur de formation (2) étant configuré pour mettre en oeuvre le procédé (3) d'évaluation automatique selon l'une quelconque des revendications précédentes.

10. Système de formation en cyberdéfense d'un utilisateur (U) selon la revendication 9 selon lequel le module orchestrateur de formation (2) comprend une base de données (25) stockant au moins le scénario (S1,S2,S3), le scénario (S1,S2,S3) étant envoyé au module de scénario (121) avec la requête (Rq_S) de démarrage du scénario (S1,S2,S3).

11. Système de formation en cyberdéfense d'un utilisateur (U) selon la revendication 10 selon lequel la base de données (25) stocke au moins le test (T), le test (T) étant envoyé au module de test (122) avec une requête (Rq_T) d'exécution du test (T).

12. Système de formation en cyberdéfense d'un utilisateur (U) selon l'une quelconque des revendication 10 à 11 selon lequel la base de données (25) stocke au moins le modèle de rapport d'incident (R_i) prédéfini.

13. Système de formation en cyberdéfense d'un utilisateur (U) selon l'une quelconque des revendication 10 à 12 selon lequel la base de données (25) stocke au moins chaque métrique (Met).

14. Système de formation en cyberdéfense d'un utilisateur (U) selon l'une quelconque des revendication 9 à 13 selon lequel le module orchestrateur de formation (2) comprend un module d'évaluation des mitigations (22) configuré pour mettre en oeuvre la vérification que l'information relative à l'état de l'infrastructure informatique simulée (11) vérifie la première règle prédéfinie.

15. Système de formation en cyberdéfense d'un utilisateur (U) selon l'une quelconque des revendication 9 à 14 selon lequel le module orchestrateur de formation (2) comprend un module d'évaluation des incidents (24) configuré pour mettre en oeuvre la vérification que l'information sur une troisième modification de l'infrastructure informatique simulée (11) issue du rapport d'incident (R_i) vérifie une deuxième règle prédéfinie.
